# EUROPEAN PATENT APPLICATION

(11) **EP 1 355 082 A1**
(43) Date of publication of application: **22.10.2003**
(21) Application number: 03008054.3
(22) Date of filing: 14.04.2003
(51) Int. Cl.: F16F 9/53

(54) **Damping device**

(30) Priority: 16.04.2002 JP 2002113956
(71) Applicant: Delta Tooling Co., Ltd., Hiroshima 736-0084 (JP)
(72) Inventor: Fujita, Etsunori, Delta Tooling Co., Ltd., Hiroshima-shi, Hiroshima 736-0084 (JP); Honda, Hiroki, Delta Tooling Co., Ltd., Hiroshima-shi, Hiroshima 736-0084 (JP); Kaneko, Shigehiko, Kawaguchi-shi, Saitama 333-0854 (JP)
(74) Representative: HOFFMANN - EITLE

(57) **Abstract**

It is an object of the present invention to make a damping force variable in a damping device that uses a magnetic fluid. In a damping device using a magnetic fluid as an operating oil, the present invention includes a groove portion 34a as a leakage magnetic field generating portion that is provided in one appropriate place or more of a pair of flow path forming members forming a fluid flow path 22b and that generates a strong leakage magnetic field to the fluid flow path 22b. Accordingly, the use of only a permanent magnet enables the behavior of magnetic particles in the magnetic fluid to be changed according to a relative position of a casing 20 and a movable portion 30 and enables a damping force to be variable, without using an electromagnet. Further, a magnetic fluid in which a specific gravity of a base liquid and that of the magnetic particles approximate each other is used so that the settlement of the magnetic particles is reduced to accelerate the behavior change of the magnetic particles, and therefore, the present invention is excellent in responsiveness at the time when the damping force is varied.

## Description

### BACKGROUND OF THE INVENTION

### 1. FIELD OF THE INVENTION

The present invention relates to a damping device, and more particularly to a damping device using a magnetic fluid as an operating oil.

### 2. DESCRIPTION OF THE RELATED ART

Various kinds of damping devices utilizing a magnetic fluid whose viscosity increases when it is placed in a magnetic field are known, and in recent years, developed are damping devices so structured that a generated damping force is variable in such a manner that fluid characteristics in a fluid flow path through which a magnetic fluid flows are changed by the change in a power quantity to electromagnetic coils disposed in plurality.

Generally, damping devices are classified into a telescopic type (expansion type) and a rotary type, and in both of the types, the abovementioned method of changing the power quantity to the electromagnetic coils is always used for making the generated damping force variable. Therefore, in order to vary the damping force according to the relative position of a movable portion side (for example, a piston) and a fixed portion side (for example, a casing), a control circuit for subtle control of the power supply timing and the power quantity to each of the electromagnetic coils is required, resulting in mechanism complication and high production cost. Moreover, since magnetic particles included in a conventionally known magnetic fluid has a larger specific gravity than a base liquid constituting the magnetic fluid, there is room for improvement in responsiveness at the time when the magnetic particles are made to cohere together (a cluster is grown) by the change in the power quantity to the electromagnetic coils.

### SUMMARY OF THE INVENTION

The present invention is made in consideration of the above problems, and it is an object thereof to provide a damping device that is capable of varying a generated damping force by the change in the behavior of magnetic particles in a magnetic fluid, only through the use of a permanent magnet, and that has a simple structure and requires low production cost. It is another object of the present invention to provide a damping device quick in behavior change of magnetic particles in response to a leakage magnetic field of a permanent magnet and excellent in responsiveness at the time when a damping force is to be varied.

In order to solve the abovementioned objects, the present invention according to claim 1 is a damping device having a movable portion movable relatively to a fixed portion, characterized in that it includes:
a magnetic fluid filled in the fixed portion;
a permanent magnet provided in at least either one of the fixed portion and the movable portion; and
a leakage magnetic field generating portion provided at least one appropriate portion or more of a pair of flow path forming members that form a fluid flow path, which is formed between the fixed portion and the movable portion, for passing the magnetic fluid therethrough and generating a strong leakage magnetic field to a part of the fluid flow path, and that
magnetic particles in the magnetic fluid passing through the fluid flow path are capable of cohering together in the vicinity of the leakage magnetic field generating portion, and thereby a damping force is made variable according to a relative position of the fixed portion and the movable portion.

The present invention according to claim 2 provides the damping device according to claim 1 characterized in that the pair of flow path forming members are formed of a magnetic substance, and the leakage magnetic field generating portion is set by forming a groove portion or a protruding portion on an opposed surface of the flow path forming member, out of the pair of flow path forming members, layered on the permanent magnet.

The present invention according to claim 3 provides the damping device according to claim 1 characterized in that the pair of flow path forming members are formed of a magnetic substance or a nonmagnetic substance, and the leakage magnetic field generating portion is set by a member to concentrate magnetic lines of force disposed in a part of at least either one of opposed surfaces of the pair of flow path forming members.

The present invention according to claim 4 provides the damping device according to claim 3 characterized in that the member to concentrate magnetic lines of force is formed of a ferromagnetic substance or a permanent magnet.

The present invention according to claim 5 provides the damping device according to claim 2 or 3 characterized in that a groove portion or a protruding portion is formed on an opposed surface of the other flow path forming member, out of the pair of flow path forming members, on which the leakage magnetic field generating portion is not set.

The present invention according to claim 6 is a damping device having a movable portion movable relatively to a fixed portion, characterized in that it includes:
a magnetic fluid filled in the fixed portion;
a permanent magnet provided in either one of the fixed portion and the movable portion; and
a pair of flow path forming members forming a fluid flow path for passing the magnetic fluid therethrough between the fixed portion and the movable portion, and that
one flow path forming member, out of the pair of flow path forming members, layered on the permanent magnet, is made of a ferromagnetic substance, a groove portion is formed at one appropriate place or more thereof, and a leakage magnetic field generating portion generating a strong leakage magnetic field to a part of the fluid flow path is set by the groove portion, and that
magnetic particles in the magnetic fluid passing through the fluid flow path are capable of cohering together in the vicinity of the leakage magnetic field generating portion, and thereby a damping force is made variable according to a relative position of the fixed portion and the movable portion.

The present invention according to claim 7 is a damping device having a movable portion movable relatively to a fixed portion, characterized in that it includes:
a magnetic fluid filled in the fixed portion;
a permanent magnet provided in either one of the fixed portion and the movable portion; and
a pair of flow path forming members forming a fluid flow path for passing the magnetic fluid therethrough between the fixed portion and the movable portion, and that
the pair of flow path forming members are formed of a magnetic substance or a nonmagnetic substance, a member to concentrate magnetic lines of force is provided in a part of at least one of opposed surfaces of the pair of flow path forming members, and a leakage magnetic field generating portion generating a strong leakage magnetic field to a part of the fluid flow path is set by the member to concentrate magnetic lines of force, and that
magnetic particles in the magnetic fluid passing through the fluid flow path are capable of cohering together in the vicinity of the leakage magnetic field generating portion, and thereby a damping force is made variable according to a relative position of the fixed portion and the movable portion.

The present invention according to claim 8 provides the damping device according to claim 7 characterized in that the member to concentrate magnetic lines of force is formed of a ferromagnetic substance or a permanent magnet.

The present invention according to claim 9 provides the damping device according to claim 6 or 7 characterized in that a groove portion or a protruding portion is formed in one place or more on an opposed surface of the other flow path forming member, out of the pair of flow path forming members.

The present invention according to claim 10 provides the damping device according to claim 1, 2, 3, 6 or 7 characterized in that the permanent magnet is magnetized in a direction perpendicular to a relative operational direction of the movable portion and the fixed portion, and is constituted of a double-pole magnet in which different poles are adjacent to each other along the relative operational direction.

The present invention according to claim 11 provides the damping device according to any one of claims 1 to 10 characterized in that a specific gravity of magnetic particles included in the magnetic fluid approximates a specific gravity of a base liquid constituting the magnetic fluid.

The present invention according to claim 12 provides the damping device according to any one of claims 1 to 11 characterized in that the movable portion is coupled to an actuator and reciprocatingly movable relatively to the fixed portion, and the damping device is a semiactive absorber type, further including another movable portion provided independently from the aforesaid movable portion, reciprocatingly movable relatively to the fixed portion in response to an input such as vibration, and damped when receiving viscous drag of the magnetic fluid.

### BRIEF DESCRIPTION OF THE DRAWINGS

FIG. 1 is a schematic cross sectional view showing a damping device according to an embodiment of the present invention;
FIGs. 2A and 2B are views explaining the operation of the damping device according to the embodiment;
FIGs. 3A to 3C are views showing other examples of the damping device according to the embodiment;
FIGs. 4A to 4F are views showing various kinds of variations of a leakage magnetic field generating portion;
FIGs. 5A to 5C are views showing various kinds of variations of the leakage magnetic field generating portion;
FIGs. 6A and 6B are views showing the states of magnetic lines of force of the leakage magnetic field generating portion;
FIG. 7 is a schematic cross sectional view showing a damping device according to another embodiment of the present invention;
FIG. 8 is a cross sectional view showing a damping device according to still another embodiment of the present invention;
FIG. 9 is a chart showing the correlation between displacement and load in a comparison example;
FIGs. 10A and 10B are charts showing the correlation between displacement and load in a test example 1;
FIGs. 11A and 11B are charts showing the correlation between displacement and load in a test example 2;
FIG. 12 is a chart showing static load characteristics of six kinds of coned disc springs; and
FIG. 13 is a chart showing a static load characteristic of a combined spring constituted of the coned disc springs shown in FIG. 12 combined in series.

### DETAILED DESCRIPTION OF THE PREFERRED EMBODIMENTS

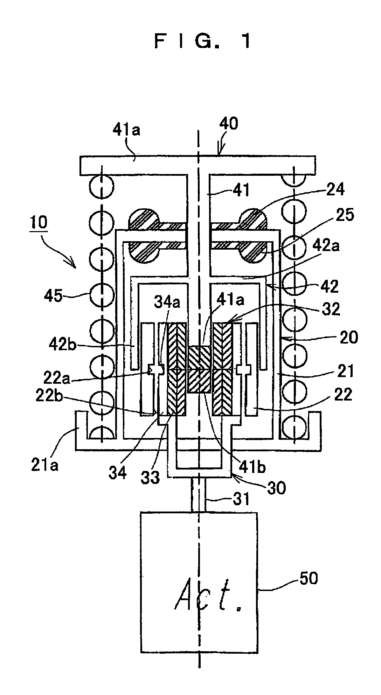

Hereinafter, the present invention will be explained in detail based on embodiments shown in the drawings. FIG. 1 is a schematic cross sectional view showing a damping device 10 according to an embodiment of the present invention. As is shown in this drawing, the damping device 10 in this embodiment is a semiactive shock absorber type device, and includes a casing 20 serving as a fixed portion, a first movable portion 30 coupled to an actuator 50 and movable relatively to this casing 20, and a second movable portion 40 movable relatively to the casing 20 and disposed on an opposite side of the arrangement direction of the first movable portion 30.

The casing 20, which is formed to have a dual cylinder structure, has an external cylinder 21 and an internal cylinder 22, and a magnetic fluid is filled airtightly in an internal space thereof. The magnetic fluid is made by dispersing magnetic particles in a base liquid using a surfactant. The magnetic particles are directed in a completely free direction in an area without any magnetic field, but in the magnetic field, magnetic moments are oriented and the magnetic particles cohere together to form or grow a cluster, thereby increasing a shear stress in a perpendicular direction to the magnetic field so that the viscosity of the magnetic fluid is increased. As the base liquid, water, fluorine oil, hydrocarbon oil, or the like is usable, and as the magnetic particles, ferrite particles, magnetite particles, or the like are usable, but the kind of the magnetic fluid is not to be limited in the present invention.

However, the magnetic particles constituting this magnetic fluid preferably have a specific gravity approximating a specific gravity of the base liquid. This is because the settlement of the magnetic particles is reduced, enabling improvement in responsiveness at the time when the cohesion state (bonding state of the cluster) of the magnetic particles due to the change of the intensity of magnetic field is changed. As a method of approximating the specific gravity thereof to that of the base liquid, for example, a method of making materials to be the magnetic particles adhere around minute particles small in specific gravity such as pearlite by evaporation or the like, a method of forming the magnetic particles in a shape such as hollow spheres or bubble-including spheres, or the like is usable.

The first movable portion 30 includes an operating shaft 31 coupled to the actuator 50 and inserted into the casing 20 from one end side of the casing 20, and a first piston member 32 reciprocating inside the casing 20 when attached to this operating shaft 31.

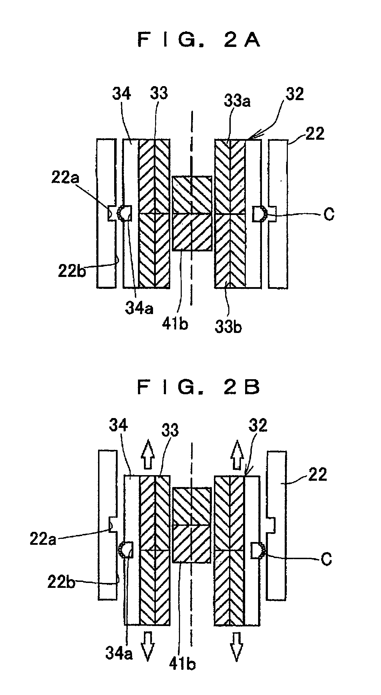

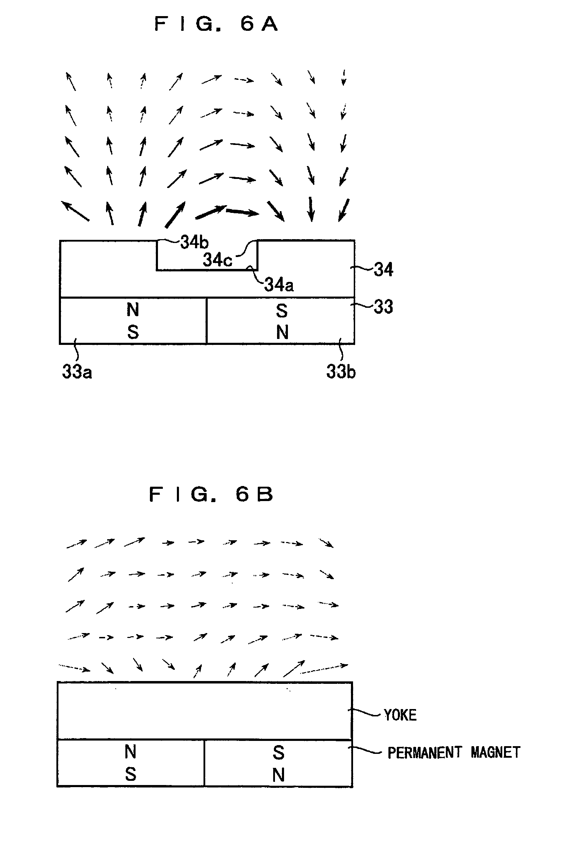

The first piston member 32 is formed in a cylindrical shape or a plate shape, and constituted of a layered body of an internal member 33 and an external member 34, the internal member 33 being constituted of a permanent magnet, and the external member 34 being constituted of a ferromagnetic substance such as iron to form a yoke. As the permanent magnet constituting the internal member 33, it is preferable to use, as shown in FIGs. 2A and 2B, a double-pole magnet, which has four magnetic poles in total, formed of two magnets 33a and 33b magnetized in a thickness direction and bonded in an axial direction in such a manner that different poles thereof are adjacent to each other (refer to FIG. 6A). This enables more efficient utilization of the magnetic field than the use of a normal magnet with a pair of an N pole and an S pole. Further, a groove portion 34a with an arbitrary width which is cut in a perpendicular direction to the axial direction in the middle in the axial direction of an outer surface is formed in the external member 34.

As is schematically shown in FIG. 6A, when such a groove portion 34a is formed, a leakage magnetic field from the magnets 33a and 33b constituting the internal member 33 is generated as shown by the arrows in FIG. 6A. In FIG. 6A, long and dark-colored arrows indicate portions where a density of magnetic lines of force is high, and as is apparent from this drawing, the density of the magnetic lines of force from one outer end corner portion 34b of the groove portion 34a toward the other outer end corner portion 34c thereof is high. This means that, when such a groove portion 34a is formed, a strong leakage magnetic field is generated between the outer end corner portions 34b and 34c. The present invention utilizes the characteristics of the leakage magnetic field which are varied by providing such irregularities on the yoke's surface, and in this embodiment, the groove portion 34a (the outer end corner portions 34b and 34c) corresponds to a leakage magnetic field generating portion. From this viewpoint, no leakage magnetic field is generated when the yoke's surface is formed to be flat as shown in FIG. 6B.

The first piston member 32, which is disposed inside the internal cylinder 22 of the aforesaid casing 20, reciprocates inside this internal cylinder 22. A gap between the external member 34 of the first piston 32 and the internal cylinder 22 is a fluid flow path 22b serving as an orifice, and these external member 34 and internal cylinder 22 constitute a pair of flow path forming members disposed to face each other. In this embodiment, a groove portion 22a with an arbitrary width which is grooved in the perpendicular direction to the axial direction is formed on an inner surface of the internal cylinder 22 in the middle of the axial direction.

The second movable portion 40 includes a second piston 42 inserted into the casing 20 from the other end side of the casing 20 via a piston rod 41 having a head portion 41a. The second piston 42 includes a flange portion 42a protruding to the periphery of the piston rod 41 and an outer peripheral cylinder portion 42b positioned between the external cylinder 21 and the internal cylinder 22 of the casing 20. Further, a sliding portion 41b constituted of a permanent magnet is provided at a tip portion 41a of the piston rod 41. The permanent magnet constituting this sliding portion 41b is structured to be magnetized, for example, in the axial direction, and disposed inside the internal member 33 constituting the first piston member 32 of the first movable portion 30. In other words, the sliding portion 41b slides in the axial direction inside the internal member 33 of the first piston 32 so that a predetermined spring force is exhibited due to a repulsive force or an attractive force generated between the permanent magnet constituting the sliding portion 41b and the permanent magnet constituting the internal member 33, and a damping force is generated due to a reciprocating movement. Incidentally, a ferromagnetic substance such as iron may be used instead of the permanent magnet as the sliding portion 41b.

A magnetic circuit constituted by the internal member 33 of the first movable portion 30 and the sliding portion 41b of the second movable portion 40 is preferably so set that the repulsive force works between these components at an equilibrium position when a mass body is supported. This causes the equilibrium position of the mass body to be maintained in an unstable balance state so that quick response to a small vibration is enabled regardless of the relative operational direction of the second movable portion 40 and the first movable portion 30, thereby improving a vibration absorbing characteristic.

One end of each coil spring 45 being a spring member is in contact with the head portion 41a provided in the piston rod 41 of the second movable portion 40 to protrude in a flange shape. The other end of this coil spring 45 is supported by a spring bearing portion 21a protruding in a flange shape along an outer periphery on one end portion side of the external cylinder portion 21 constituting the casing 20, and in a normal state, the coil springs 45 are biased in a direction so as to cause the head portion 41a of the piston rod 41 to be apart therefrom. This head portion 41a supports a mass body such as an engine mount.

Note that rubber members 24 and 25 are provided on an inner and an outer surface of an end wall, which is positioned in an upper portion in FIG. 1, of the casing 20, and when the second movable portion 40 greatly changes in its position in accordance with a big vibration input or the like, the rubber members 24 and 25 allow the head portion 41a and the second piston 42 to come in contact therewith, and thus exercise a shock absorbing function of preventing bottoming.

The damping device 10 in this embodiment is so structured that, when the mass body is vibrated due to an inputsuch as vibration, the piston rod 41 of the second movable portion 40 reciprocates in accordance with this vibration, and at the same time, the second piston 42 reciprocates inside the casing 20. Consequently, a spring characteristic of the coil springs 45 reduces the vibration, the repulsive force or the attractive force between the sliding portion 41b and the internal member 33 of the first piston 32 generates a predetermined spring force, and structural damping by the reciprocating movement generates a damping force.

The second piston 42 constituting the second movable portion 40 reciprocates inside the casing 20, thereby compressing the magnetic fluid in a space surrounded by the flange portion 42a and the outer peripheral cylinder portion 42b when operating in a direction in which the coil springs 45 contract, and compressing the magnetic fluid in an opposite space across the flange portion 42a and the outer peripheral cylinder portion 42b when operating in a direction in which the coil springs 45 expand. Consequently, the magnetic fluid moves to/from the abovementioned spaces through the fluid flow path 22b formed by the external member 34 constituting the first movable portion 30 and the internal cylinder 22 of the casing 20 so that a predetermined damping force works due to resistance at the time when the magnetic fluid passes through this fluid flow path 22b serving as an orifice.

Meanwhile, the first movable portion 30 is operated to reciprocate inside the casing 20 by the actuator 50. Accordingly, as shown in FIGs. 2A and 2B, the resistance at the time when the magnetic fluid passes through the fluid flow path 22b varies depending on the relative position of the groove portion 34a formed on the external member 34 of the first movable portion 30 and the groove portion 22a formed on an inner periphery of the internal cylinder 22. Incidentally, the internal cylinder 22 is made not of a ferromagnetic substance but of a nonmagnetic substance such as aluminum in this embodiment.

More specifically, in the groove portion 34a of the external member 34, a strong leakage magnetic field generating portion is formed between the outer end corner portions 34b and 34c as shown in FIG. 6A. Consequently, the magnetic particles included in the magnetic fluid cohere together in the vicinity of the groove portion 34a in which the strong leakage magnetic field generating portion is formed to form a large cluster C, for example, as schematically shown in FIGs. 2A and 2B. Therefore, the large cluster C works as a resistance for the magnetic fluid flowing through the fluid flow path 22a. As shown in FIG. 2A, at a position where the groove portion 34a of the external member 34 and the groove portion 22a of the internal cylinder 22 face each other, since the distance between these grooves is long, the magnetic fluid flows around this cluster C without being given a very large resistance even when the cluster C exists. When, on the other hand, the groove portion 34a of the external member 34 and the groove portion 22a of the internal cylinder 22 are in a deviated positional relation in which they do not directly face each other as shown in FIG. 2B, the cluster C protrudes in a narrow path in the fluid flow path 22b to be an obstacle to the flow of the magnetic fluid. Accordingly, in the state shown in FIG. 2A, the resistance is small at the time when the magnetic fluid flows through the fluid flow path 22b serving as the orifice, resulting in a small damping force, while, in the state shown in FIG. 2B, the damping force is made larger since the magnetic fluid is difficult to pass through the fluid flow path 22b serving as the orifice.

Therefore, according to this embodiment, a strong leakage magnetic field generating portion is partially provided, in spite that no electromagnet is used, and it is possible to change a generated damping force (damping ratio) in accordance with the variation in the relative position of the first movable portion 30 driven by the actuator 50 and the casing 20.

Incidentally, it is arbitrary whether the damping device 10 is structured so that the magnetic fluid flows in the gap between the internal member 33 constituting the first movable portion 30 and the sliding portion 41b of the second movable portion 40, and various settings are possible depending on intended damping characteristics. For example, when the magnetic circuit constituted by the internal member 33 of the first movable portion 30 and the sliding portion 41b of the second movable portion 40 is set so as to cause the repulsive force to act between these components at the equilibrium position when a mass body is supported, the magnetic fluid can be provided so as to flow also in the gap between these components. Since these components form a repulsive magnetic field at the equilibrium position, only a small cohesion or little cohesion is caused in the magnetic fluid between these components so that the cohesion does not act as a sliding resistance between the sliding portion 41b and the internal member 33, but when these components change in the relative position to form an attractive magnetic field, the cohesion of the magnetic fluid in the gap between these components becomes large. Consequently, it is possible to cause not only the damping effect between the first movable portion 30 and the internal cylinder 22 constituting the casing 20 but also the damping effect between the sliding portion 41b and the internal member 33, as described here.

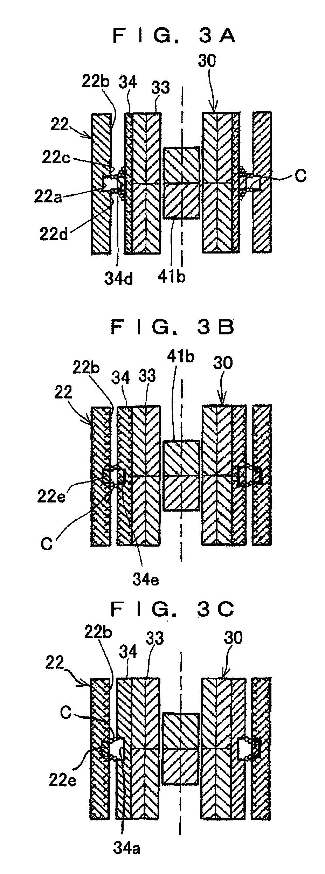

FIGs. 3A to 3C are views showing other examples of the above-described leakage magnetic field generating portion. In FIG. 3A, as the external member 34 constituting the first movable portion 30, a nonmagnetic substance such as aluminum is layered on the internal member 33 formed of the permanent magnet, and a protruding portion 34d formed of, for example, a ferromagnetic substance such as iron is formed in a belt shape at an appropriate position in the axial direction of the outer surface of the external member 34. The internal cylinder 22 of the casing 20 forming the fluid flow path 22b together with this external member 34 is made of a ferromagnetic substance having the groove portion 22a on the inner surface thereof. As a result, since the outer surface is covered with a nonmagnetic substance, magnetic lines of force from the permanent magnet of the internal member 33 concentrate in the protruding portion 34d being the ferromagnetic substance and are directed toward the opposed internal cylinder 22. Consequently, the leakage magnetic field is generated between the vicinity of the protruding portion 34b and the opposed internal cylinder 22. At this time, the magnetic lines of force concentrate between outer end corner portions 22c and 22d forming the groove portion 22a of the internal cylinder 22, similarly to the above, so that the leakage magnetic field therebetween becomes strongest at the position where the protruding portion 34b faces the groove portion 22a. Therefore, in this example, the protruding portion 34d made of the ferromagnetic substance layered on the external member 34 and the groove portion 22a of the internal cylinder 22 made of the ferromagnetic substance constitute the leakage magnetic field generating portion of the present invention. Incidentally, the nonmagnetic substance forming the external member 34 may also be a rubber, a synthetic resin material, or the like, and it can be provided by adhesive bonding or the like on the internal member 33 made of the permanent magnet, can be integrally formed with the internal member 33, or can be integrated therewith by pressure fit.

When the first movable position 30 reciprocates inside the casing 20, driven by the actuator 50 to deviate the relative position of the protruding portion 34d made of the ferromagnetic substance layered on the external member 34 and the groove portion 22a of the internal cylinder 22 made of the ferromagnetic substance from the directly facing position, the leakage magnetic field generated between the protruding portion 34d and other portions of the internal cylinder 22 excepting the groove portion 22abecomes smaller than that when the protruding portion 34d and the groove portion 22a directly face each other.

Therefore, in this example, when the relative position of the protruding portion 34d made of the ferromagnetic substance layered on the external member 34 and the groove portion 22a of the internal cylinder 22 made of the ferromagnetic substance is the directly facing position, the bonding state of the cluster C of the magnetic particles in the magnetic fluid becomes large, as shown in FIG. 3A, so that the cluster C acts as a large resistance for the magnetic fluid passing through the fluid flow path 22b to increase the damping force. On the other hand, when the protruding portion 34d and the groove portion 22a do not directly face each other, the bonding force of the cluster C of the magnetic particles becomes weak so that the magnetic fluid easily flows through the fluid flow path 22b to decrease the damping force.

The example shown in FIG. 3B is different from the example shown in FIG. 3A in that, in addition to the external member 34 of the first movable portion 30, the internal cylinder 22 forming the fluid flow path 22b is also formed of a nonmagnetic substance such as aluminum, and ferromagnetic substances 34e and 22e such as iron are disposed, being buried in the middle in the axial direction at positions where they can face each other.

Since, also in this example, the external member 34 of the first movable portion 30 is made of the nonmagnetic substance, the magnetic lines of force from the permanent magnet constituting the internal member 33 concentrate so as to pass through the ferromagnetic substance 34e buried in the external member 34. Then, the magnetic lines of force passing through this ferromagnetic substance 34e are directed toward the ferromagnetic substance 22e buried in the opposed internal cylinder 22. Therefore, the leakage magnetic field given to the fluid flow path 22b is strongest at the position where the ferromagnetic substance 34e of the external member 34 and the ferromagnetic substance 22e of the internal cylinder 22 directly face each other, and when the positional relation therebetween is deviated by the drive of the actuator, the leakage magnetic field given to the fluid flow path 22b becomes smaller.

In this example, the leakage magnetic field generating portion is formed by the ferromagnetic substrate 34e of the external member 34 and the ferromagnetic substance 22e of the internal cylinder 22, and at the position where they directly face each other, the growth of the cluster C of the magnetic particles becomes largest so that the cluster C works as the resistance for the magnetic fluid passing through the fluid flow path 22b to increase the damping force, but on the other hand, when the positional relation thereof is deviated from the directly facing position, the cohesion of the magnetic fluid becomes small so that the magnetic fluid easily passes through the fluid flow path 22b to decrease the damping force.

The example shown in FIG. 3C is so structured that, similarly to the example shown in FIG. 1 and FIGs. 2A and 2B, the external member 34 of the first movable portion 30 is made of the ferromagnetic substance such as iron and has the groove portion 34a formed therein while, similarly to the example shown in FIG. 3B, the internal cylinder 22 is formed of the nonmagnetic substance such as aluminum and have the ferromagnetic substance 22e formed therein in the middle in the axial direction.

In this example, similarly to the example shown in FIG. 1 and FIGs. 2A and 2B, the leakage magnetic field is strong between the outer end corner portions 34b and 34c of the groove portion 34a of the external member 34 (refer to FIG. 6A), and when this groove portion 34a and the ferromagnetic substance 22e of the internal cylinder 22 face each other, the magnetic lines of force concentrating between the outer end corner portions 34b and 34c are directed in the direction of the ferromagnetic substance 22e. Therefore, the growth of the cluster C of the magnetic particles becomes largest when they directly face each other, and the cohesion of the magnetic particles becomes smaller when the positional relation thereof is deviated from the directly facing position. As a result, also in this example, when the groove portion 34a of the external member 34 and the ferromagnetic substance 22e of the internal cylinder 22 directly face each other, the magnetic fluid is difficult to pass through the fluid flow path 22b so that the damping force is increased, while, when the positional relation thereof is deviated from the directly facing position, the magnetic fluid easily passes through the fluid flow path 22b so that the damping force is decreased.

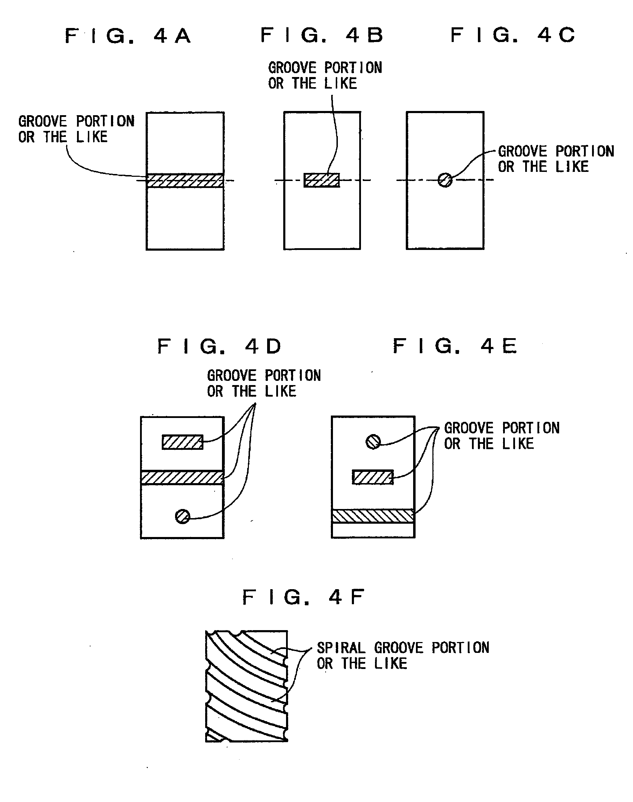

Incidentally, instead of the ferromagnetic substance provided being layered on or buried in the nonmagnetic substance in FIGs. 3A to 3C, a permanent magnet is usable, and alternatively, a permanent magnet with a ferromagnetic substance layered thereon is also usable. Further, in each of the examples shown in FIG. 1, FIGs. 2A and 2B, and FIGs. 3A to 3C, the groove portion, the protruding portion, and the ferromagnetic substance (or the permanent magnet) serving as the leakage magnetic field generating portion provided in a part of the external member 34 or the internal cylinder 22 can be provided to extend all through the length in a direction perpendicular to the axial direction, having an arbitrary width as shown by the slant lines in FIG. 4A, can be provided to have a length about half the whole length in the direction perpendicular to the axial direction as shown by the slant lines in FIG. 4B, or can be provided only in the vicinity of the center of the whole length in the perpendicular direction to the axial direction as shown by the slant lines in FIG. 4C. This enables various settings of the cohesion state of the magnetic particles (bonding state of the cluster) to easily adjust a necessary damping force. Further, as shown in FIGs. 4D and 4E, a plurality of the abovementioned grooves or the like forming the leakage magnetic field generating portions can be provided along the axial direction, each having a different size. In this case, different damping forces can be imparted at a plurality of stages according to the movable position of the first movable portion 30. Namely, by providing the groove portions or the like in a plurality of places and changing the combination of the size and so on thereof in various manners, it is made possible to cause the damping force to have a linear form or a nonlinear form, or has a characteristic such as an impulse (step) response. Further, as shown in FIG. 4F, it is also possible to form the external member 34 in a cylindrical shape and form the aforementioned groove or the like in a spiral shape. In the case of the formation in the spiral shape, it is possible, for example, to easily work substantially the plural grooves.

Further, as shown in FIG. 5A, such a structure is also possible that the external member 34 is formed of a nonmagnetic substance such as aluminum or synthetic resin, groove portions 34f are formed in the vicinity of upper and lower end portions thereof, and ferromagnetic substances 34g such as iron are buried around the groove portions 34f. In this case, groove portions 22f are formed in the internal cylinder 22 in the vicinity of upper and lower end portions thereof, facing the groove portions 34f of the external member 34 respectively. This enables such a structure that a flow amount of the magnetic fluid is large and the damping is small when a small vibration occurs in the vicinity of equilibrium positions, which are defined as the positions at which the groove portions 34f and 22f face each other, and the damping is increased when the external member 34 makes a big reciprocating movement relatively to the internal cylinder 22. This structure is the same in this point as the example shown in FIG. 1 and FIGs. 2A and 2B, but the formation of the plural groove portions allows the adjustment of the magnitude of the damping ratio. Incidentally, the reference symbol 34h in FIG. 5A denotes a ferromagnetic substance as a yoke provided in the center of the external member 34.

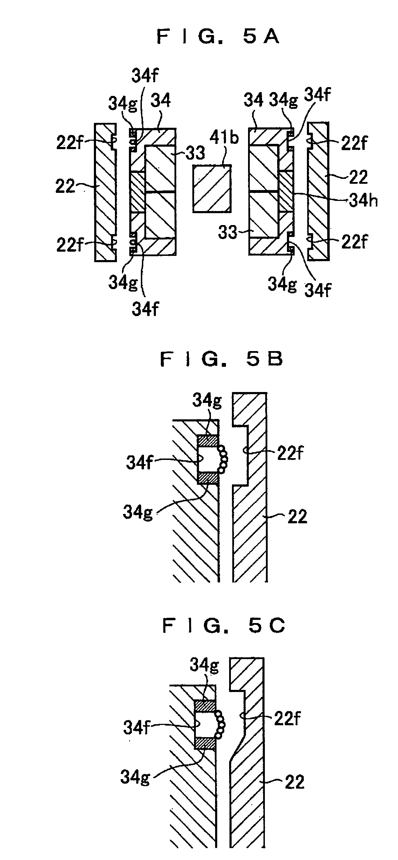

Each of the groove portions 22f formed in the internal cylinder 22 is preferably formed to be slightly longer (wider) in the operational direction than each of the groove portions 34f of the external member 34, as shown in FIG. 5B. Such a structure prevents the damping from becoming too larger at the time of the small vibration. Consequently, the spring force exhibited in the magnetic circuit constituted of the sliding portion 41b made of the permanent magnet or the like which is provided in the second movable portion 40, and the internal member 33 made of the permanent magnet of the first movable portion 30 acts effectively so that the small vibration can be eliminated effectively. Further, when the groove portion 22f of the internal cylinder 22 is so structured to become gradually shallower in the operational direction as shown in FIG. 5C, abrupt change in the damping ratio is prevented so that the shift between the state in which the aforesaid spring force mainly works at the time of the small vibration and the state in which a high damping ratio works at the time of the occurrence of a large amount of displacement becomes smooth. Incidentally, it is a matter of course that these contrivances such as the groove structure are similarly applicable to the examples shown in FIG. 1 to FIG. 3C explained above.

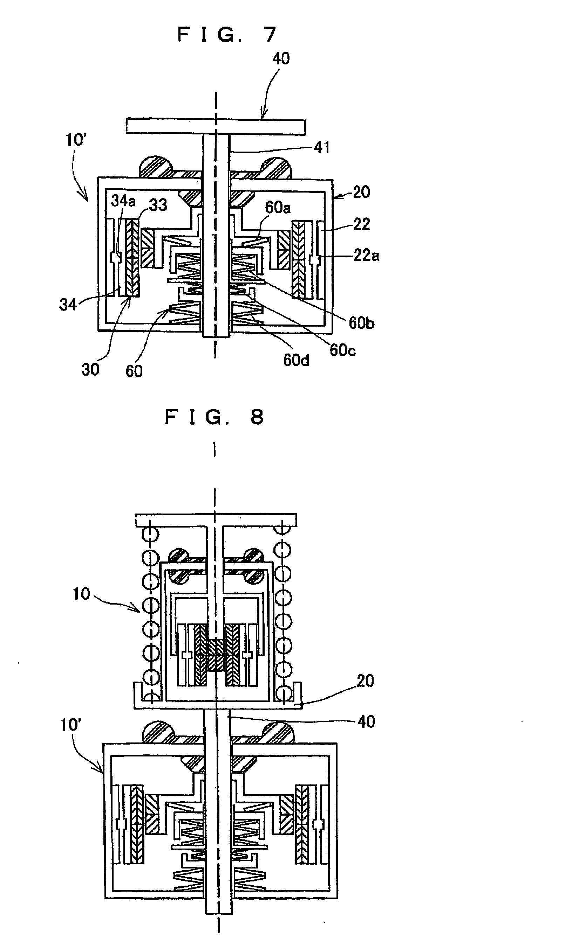

FIG. 7 is a view showing a damping device 10' according to another embodiment of the present invention. This embodiment is the same as the above-described embodiment shown in FIG. 1 and FIGs. 2A and 2B in that a groove portion 22a is provided in an inner surface of an internal cylinder 22 constituting a casing 20 and a groove portion 34a is formed in an external member 34 of a first movable portion 30 coupled to an actuator (not shown) so that magnetic lines of force from a permanent magnet constituting an internal member 33 are concentrated in outer end corner portions of the groove portion 34a to form a strong leakage magnetic field generating portion in a part, thereby making a damping force variable.

However, this embodiment is different in the structure of supporting a second movable portion 40, on which an input such as vibration of a mass body acts, in a casing 20. To be more specific, in this embodiment, a piston rod 41 of the second movable portion 40 is resiliently provided using a plurality of coned disc springs 60 in the casing 20. The coned disc springs can exhibit various spring characteristics depending on the height of the bottom surface of an inside diameter portion (the height obtained by subtracting a plate thickness (t) from a total height (HO) of the coned disc spring) and the ratio of the plate thickness, show either linearity or nonlinearity depending on the relation between the height of the inside diameter bottom surface and the plate thickness ratio, and have such a characteristic that, in a predetermined case, load is not increased, namely, a spring constant becomes substantially zero even when deflection is increased. Further, for example, the use of two coned disc springs in parallel doubles the load, the use of three in series triples the deflection, and the combination of both of them makes it possible to obtain a progressive nonlinear characteristic.

In FIG. 7, a single coned disc spring 60a and coned disc springs 60b to 60d combined in series are disposed in this order from the top of the drawing, and they are disposed so as to exhibit different spring characteristics according to the amount of displacement of the second movable portion 40 and to have such a characteristic in a plurality of regions, for example, that the spring constant becomes substantially zero in accordance with the magnitude or the frequency of an input.

Therefore, in this embodiment, since a damping force variable characteristic by the first movable portion 30 in addition to a vibration eliminating characteristic by the coned disc spring 60 can thus work, a damping device having a spring characteristic and a damping characteristic conforming to various input conditions and capable of varying the damping ratio can be provided.

FIG. 8 is a view showing still another embodiment of the present invention, in which the second movable portion 40 of the damping device 10' according to the embodiment shown in FIG. 7 is coupled to the casing 20 of the damping device 10 according to the embodiment shown in FIG. 1 and FIGs. 2A and 2B. According to this embodiment, since it is possible to have only the upper damping device 10 work, to have only the lower damping device 10' work, or further, to have both of them work, precise damping control conforming to a larger variety of input conditions is possible than that when each of them is independently used.

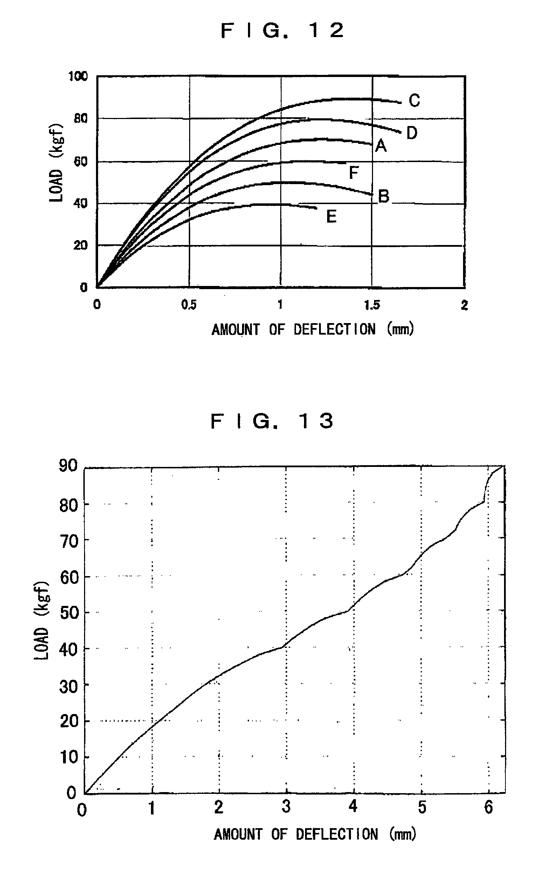

For reference, FIG. 12 and FIG. 13 respectively show the result of measuring a static load characteristic of each of six kinds of coned disc springs A to F shown in the following table when each of them is used independently, and the result of measuring a static load characteristic of a combined spring constituted of these six kinds of coned disc springs combined in series. As is apparent from FIG. 13, the combination of these six kinds of coned disc springs in series can form a nonlinear characteristic at a plurality of stages. Therefore, when this structure is combined with, for example, the magnetic circuit (magnet spring structure) in which the sliding portion 41b formed of the permanent magnet and the internal member 33 formed of the permanent magnet are combined, the damping control conforming to various kinds of input conditions is made possible, such that regions where the load does not increase even with the increase in the amount of the displacement can be formed in a plurality of points.

**[Table 1]**

| | A | B | C | D | E | F |
|---|---|---|---|---|---|---|
| D mm | 86.0 | 80.0 | 89.0 | 83.0 | 75.0 | 80.0 |
| d mm | 55.2 | 55.2 | 55.2 | 55.2 | 55.2 | 55.2 |
| t mm | 1.0 | 0.8 | 1.2 | 1.0 | 0.8 | 1.0 |
| h mm | 2.2 | 2.0 | 2.2 | 2.2 | 1.6 | 1.8 |
| | | | | | | |
| h/t | 2.2 | 2.5 | 1.8 | 2.2 | 2.0 | 1.8 |

Note that, in Table 1, D represents the outside diameter, d represents the inside diameter, t represents the plate thickness, h represents the height of the bottom surface of the inside diameter portion (the height obtained by subtracting the plate thickness (t) from the total height(HO) of the coned disc spring) of the coned disc spring, respectively.

It should be noted that the damping device of the present invention is not limited to the above-described embodiments. In all of the above-described embodiments, the present invention is applied to the semiactive shock absorber type damping device, but the damping force variable system of the present invention is of course applicable to a shock absorber for passive control having no actuator by setting the leakage magnetic field generating portion in the movable portion. Further, not limited to a telescopic damping device such as a shock absorber, it is possible to provide a system capable of varying a damping force in such a manner, for example, that a permanent magnet constituting a movable portion (rotary member) disposed inside a casing and a yoke formed on an outer side thereof are formed in a cylindrical shape and a groove portion or the like is formed on a peripheral surface of this yoke to set the leakage magnetic field generating portion of the present invention in a rotary damping device such as a rotary damper.

### (Test Examples)

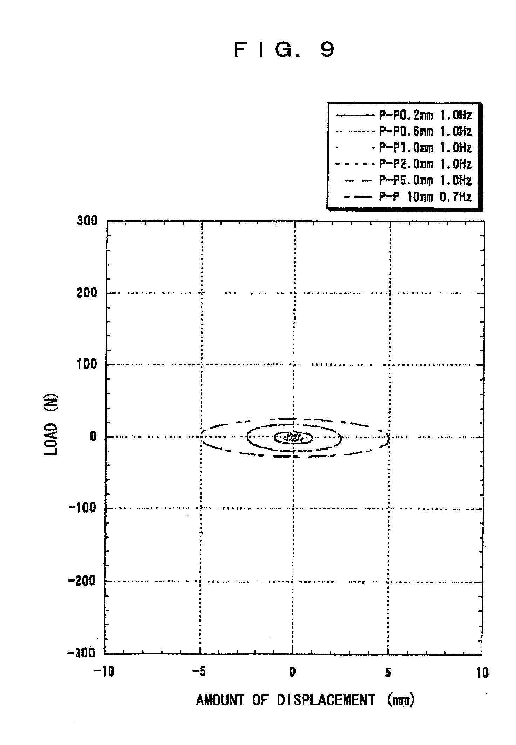

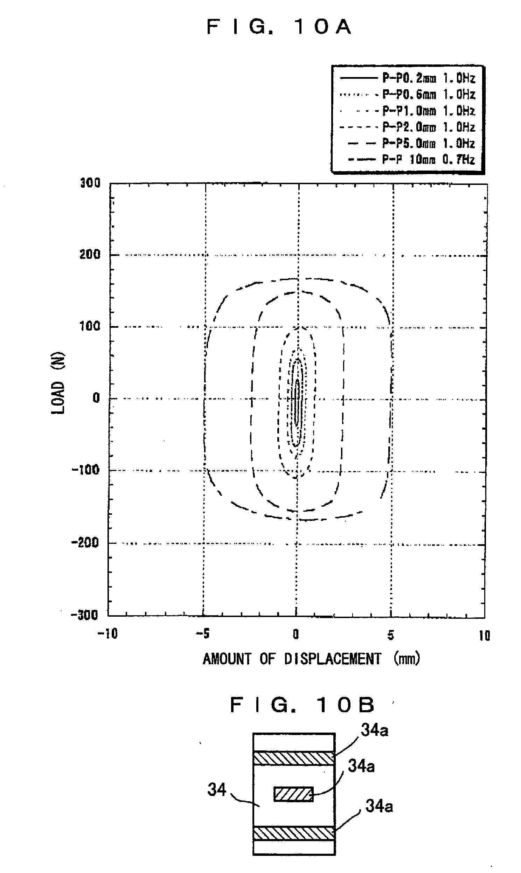

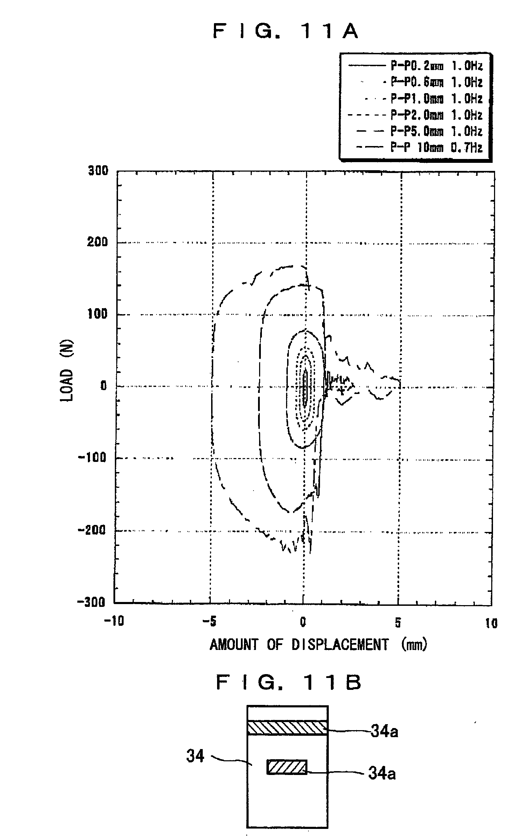

In the device shown in FIG. 1 and FIGs. 2A and 2B, a casing structured to have the internal cylinder 22 and no groove portion 22a formed therein is used. Also the external members 34, which are the yoke provided in the first movable portion 30, different in the number of the groove portions 34a formed therein are each combined with the casing. Then, the first movable portion 30 is vibrated by the actuator 50 and load relative to amplitude (amount of displacement) is measured for each of the examples to study difference in the damping ratio (damping force). FIG. 9 to FIG. 11 show the results of the measurement. FIG. 9 shows the result when no groove portion is formed in the external member 34 (a comparison example), FIG. 10A shows the result when the groove portion 34a is formed in three places, namely, the vicinities of upper and lower ends and the vicinity of the center of the external member 34 as shown in FIG. 10B (a test example 1), and FIG. 11A shows the result when the groove portion 34a is formed in two places of the external member 34, namely, the vicinity of the lower end and the vicinity of the center as shown in FIG. 11B (a test example 2). Note that 'P - P' in the drawings represents the amplitude caused by the actuator and '1.0 Hz' and so on are vibration frequencies.

First, when the comparison example and the test examples 1 and 2 are compared, it is seen that the load in both of the test examples is larger and thus the damping force (damping ratio) is larger than those in the comparison example. This indicates that a portion having a strong leakage magnetic field is formed by the groove portion 34a so that the magnetic particles in the magnetic fluid cohere together, thereby decreasing an effective sectional area of the fluid flow path.

In the test example 1, even if the amplitude (amount of displacement) of the external member 34 is increased so that either of the upper and the lower groove portion 34a does not face (overlap) the internal cylinder 22, the magnetic particles cohering together in the other two groove portions 34a limit the effective sectional area of the fluid flow path so that the load is increased in either direction of the vibration.

In the test example 2, when the external member 34 increases in its amplitude (amount of displacement) to move in an upward direction, neither the groove portion 34a formed in the vicinity of the upper end nor the groove portion 34a formed in the vicinity of the center does not overlap the opposed surface of the internal cylinder 22 so that the limitation of the effective sectional area of the fluid flow path by the cohesion (cluster) of the magnetic particles becomes small to decrease the load. When, on the other hand, the external member 34 increases in its amplitude to move in a downward direction, each of the groove portions 34a formed in the vicinity of the upper end and the vicinity of the center is kept in an overlap state relatively to the opposed surface of the internal cylinder 22 so that the load is increased. In short, in the test example 2, it is more prominently shown that the damping force (damping ratio) is made variable by the relative position of the external member 34 and the internal cylinder 22. From the foregoing, it is seen that the cohesion behavior of the magnetic particles can be changed in various ways by varying the settings of the forming condition of the groove portion 34a serving as the leakage magnetic field generating portion as in the test example 1 and the test example 2, and as a result, a damping device capable of exhibiting various damping characteristics can be provided.

The present invention includes, in a damping device using a magnetic fluid as an operating oil, a leakage magnetic field generating portion which is provided in one appropriate place or more of a pair of flow path forming members forming a fluid flow path and which generates a strong leakage magnetic field to this fluid flow path. Accordingly, the behavior of magnetic particles in the magnetic fluid can be varied according to the relative position of a casing and a movable portion to make the damping force variable only with a permanent magnet, without using an electromagnet. This enables simple structure and low-cost manufacture. Further, the use of the magnetic fluid in which the specific gravity of a base liquid approximates that of the magnetic particles reduces the settlement of the magnetic particles to accelerate the behavior change of the magnetic particles, and therefore, the present invention is excellent in responsiveness in varying the damping force.

While preferred embodiments of the invention have been described with a certain degree of particularity with reference to the drawings, obvious modifications and variations are possible in light of the above teachings. The scope of the invention is to be determined from the claims appended thereto.

## Claims

1. A damping device having a movable portion movable relatively to a fixed portion, comprising:
a magnetic fluid filled in said fixed portion;
a permanent magnet provided in at least either one of said fixed portion and said movable portion; and
a leakage magnetic field generating portion provided at least one appropriate portion or more of a pair of flow path forming members that form a fluid flow path, which is formed between said fixed portion and said movable portion, for passing said magnetic fluid therethrough and generating a strong leakage magnetic field to a part of the fluid flow path,
wherein magnetic particles in the magnetic fluid passing through said fluid flow path are capable of cohering together in the vicinity of said leakage magnetic field generating portion, and thereby a damping force is made variable according to a relative position of said fixed portion and said movable portion.

2. The damping device according to claim 1, wherein said pair of flow path forming members are formed of a magnetic substance, and said leakage magnetic field generating portion is set by forming a groove portion or a protruding portion on an opposed surface of the flow path forming member, out of said pair of flow path forming members, layered on said permanent magnet.

3. The damping device according to claim 1, wherein said pair of flow path forming members are formed of a magnetic substance or a nonmagnetic substance, and said leakage magnetic field generating portion is set by a member to concentrate magnetic lines of force disposed in a part of at least either one of opposed surfaces of said pair of flow path forming members.

4. The damping device according to claim 3, wherein said member to concentrate magnetic lines of force is formed of a ferromagnetic substance or a permanent magnet.

5. The damping device according to claim 2 or 3, wherein a groove portion or a protruding portion is formed on an opposed surface of the other flow path forming member, out of said pair of flow path forming members, on which the leakage magnetic field generating portion is not set.

6. A damping device having a movable portion movable relatively to a fixed portion, comprising:
a magnetic fluid filled in said fixed portion;
a permanent magnet provided in either one of said fixed portion and said movable portion; and
a pair of flow path forming members forming a fluid flow path for passing said magnetic fluid therethrough between said fixed portion and said movable portion,
wherein one flow path forming member, out of said pair of flow path forming members, layered on said permanent magnet is made of a ferromagnetic substance, a groove portion is formed at one appropriate place or more thereof, and a leakage magnetic field generating portion generating a strong leakage magnetic field to a part of the fluid flow path is set by the groove portion, and
wherein magnetic particles in the magnetic fluid passing through said fluid flow path are capable of cohering together in the vicinity of said leakage magnetic field generating portion, and thereby a damping force is made variable according to a relative position of said fixed portion and said movable portion.

7. A damping device having a movable portion movable relatively to a fixed portion, comprising:
a magnetic fluid filled in said fixed portion;
a permanent magnet provided in either one of said fixed portion and said movable portion; and
a pair of flow path forming members forming a fluid flow path for passing said magnetic fluid therethrough between said fixed portion and said movable portion,
wherein said pair of flow path forming members are formed of a magnetic substance or a nonmagnetic substance, a member to concentrate magnetic lines of force is provided in a part of at least one of opposed surfaces of said pair of flow path forming members, and a leakage magnetic field generating portion generating a strong leakage magnetic field to a part of said fluid flow path is set by the member to concentrate magnetic lines of force, and
wherein magnetic particles in the magnetic fluid passing through said fluid flow path are capable of cohering together in the vicinity of said leakage magnetic field generating portion, and thereby a damping force is made variable according to a relative position of said fixed portion and said movable portion.

8. The damping device according to claim 7, wherein said member to concentrate magnetic lines of force is formed of a ferromagnetic substance or a permanent magnet.

9. The damping device according to claim 6 or 7, wherein a groove portion or a protruding portion is formed in one place or more on an opposed surface of the other flow path forming member, out of said pair of flow path forming members.

10. The damping device according to claim 1, 2, 3, 6 or 7, wherein said permanent magnet is magnetized in a direction perpendicular to a relative operational direction of said movable portion and said fixed portion, and is constituted of a double-pole magnet in which different poles are adjacent to each other along the relative operational direction.

11. The damping device according to any one of claims 1 to 10, wherein a specific gravity of magnetic particles included in said magnetic fluid approximates a specific gravity of a base liquid constituting the magnetic fluid.

12. The damping device according to any one of claims 1 to 11, wherein said movable portion is coupled to an actuator and reciprocatingly movable relatively to the fixed portion, and the damping device is a semiactive absorber type, further comprising another movable portion provided independently from said movable portion, reciprocatingly movable relatively to said fixed portion in response to an input such as vibration, and damped when receiving viscous drag of said magnetic fluid.
